Europäisches Patentamt

European Patent Office

Office européen des brevets

(11) Publication number: **0 336 873**
**A2**

## (12) EUROPEAN PATENT APPLICATION

(21) Application number: **89630023.3**

(22) Date of filing: **09.02.89**

(51) Int. Cl.⁴: **C 04 B 35/10**
**C 04 B 35/65, C 04 B 35/71**

(30) Priority: **10.02.88 US 154742   06.12.88 US 280699**

(43) Date of publication of application:
**11.10.89 Bulletin 89/41**

(84) Designated Contracting States:
**AT BE CH DE ES FR GB GR IT LI LU NL SE**

(71) Applicant: **LANXIDE TECHNOLOGY COMPANY.LP**
**Tralee Industrial Park**
**Newark Delaware 19711 (US)**

(72) Inventor: **Kuszyk, Jack Andrew**
**8 Coach Hill Court**
**Newark Delaware 19711 (US)**

(74) Representative: **Andrae, Steffen, Dr. et al**
**c/o DENNEMEYER & ASSOCIATES Steinstrasse 44**
**D-8000 München 80 (DE)**

The title of the invention has been amended (Guidelines for Examination in the EPO, A-III, 7.3).

(54) **Ceramic composite article for use in thermal shock environments.**

(57) The present invention relates to a method of using a novel ceramic composite body. Particularly, the ceramic composite body comprises an oxidation reaction product of a parent metal which forms a polycrystalline matrix embedding a filler material (e.g., silicon carbide particles). The ceramic composite body shows unexpected and desirable results when subjected to thermal shock.

FIG. 1

## Description

### Field of the Invention

This invention relates to a method of using a novel ceramic composite body in an environment which subjects the body to thermal shock. Particularly, it has been discovered that a ceramic composite body made by embedding a silicon carbide particulate material with an alumina oxidation reaction product has unexpected, and very desirable, thermal shock properties.

### Background of the Invention and Commonly Owned Patent Applications

In recent years, there has been an increasing interest in the use of ceramics for structural applications historically served by metals. The impetus for this interest has been the superiority of ceramics with respect to certain properties, such as corrosion resistance, hardness, modulus of elasticity, and refractory capabilities, when compared with metals.

Current efforts at producing higher strength, more reliable, and tougher ceramic articles are largely focused upon (1) the development of improved processing methods for monolithic ceramics and (2) the development of new material compositions, notably ceramic matrix composites. A composite structure is one which comprises a heterogeneous material, body or article made of two or more different materials which are intimately combined in order to attain desired properties of the composite. For example, two different materials may be intimately combined by embedding one in a matrix of the other. A ceramic matrix composite structure typically comprises a ceramic matrix which incorporates one or more diverse types of filler materials such as particulates, fibers, rods, and the like.

There are several known limitations or difficulties in substituting ceramics for metals, such as scaling versatility, capability to produce complex shapes, satisfying the properties required for the end use application, and costs. Several copending patent applications, and one Issued Patent, assigned to the same owner as this application (hereinafter sometimes referred to as Commonly Owned Patent Applications), overcome these limitations or difficulties and provide novel methods for reliably producing ceramic materials, including composites. The method is disclosed generically in Commonly Owned U.S. Patent No. 4,713,360, issued on December 15, 1987 in the names of Marc S. Newkirk et al and entitled "Novel Ceramic Materials and Methods for Making Same". This Patent discloses a method of producing self-supporting ceramic bodies grown as the oxidation reaction product of a molten parent precursor metal which is reacted with a vapor-phase oxidant to form an oxidation reaction product. Molten metal migrates through the formed oxidation reaction product to react with the oxidant thereby continuously developing a ceramic polycrystalline body which can, if desired, include an interconnected metallic component. The process may be enhanced by the use of one or more dopants alloyed with the parent metal. For example, in the case of oxidizing aluminum in air, it is desirable to alloy magnesium and silicon with the aluminum to produce alpha-alumina ceramic structures. This method was improved upon by the application of dopant materials to the surface of the parent metal, as described in Commonly Owned U.S. Patent Application Serial No. 220,935, filed June 23, 1988 (and now allowed), which is a continuation-in-part of U.S. Application Serial No. 822,999, filed January 27, 1986 (and now abandoned), which is a continuation-in-part of U.S. Application Serial No. 776,965, filed September 17, 1985 (and now abandoned), which is a continuation-in-part of U.S. Application Serial No. 747,788, filed June 25, 1985 (and now abandoned), which is a continuation-in-part of U.S. Application Serial No. 632,636, filed July 20, 1984 (and now abandoned), all in the names of Marc S. Newkirk et al and entitled "Methods of Making Self-Supporting Ceramic Materials".

This oxidation phenomenon was utilized in producing ceramic composite bodies as described in Commonly Owned U.S. Patent Application Serial No. 819,397, filed January 17, 1986 (and now allowed), which is a continuation-in-part of U.S. Application Serial No. 697,876, filed February 4, 1985 (and now abandoned), both in the names of Marc S. Newkirk et al and entitled "Composite Ceramic Articles and Methods of Making Same". These applications disclose novel methods for producing a self-supporting ceramic composite by growing an oxidation reaction product from a parent metal into a permeable mass of filler, (e.g., a silicon carbide particulate filler) thereby infiltrating the filler with a ceramic matrix. The resulting composite, however, has no defined or predetermined geometry, shape, or configuration.

A method for producing ceramic composite bodies having a predetermined geometry or shape is disclosed in Commonly Owned and Copending U.S. Patent Application Serial No. 861,025, filed May 8, 1986, in the names of Marc S. Newkirk et al. In accordance with the method in this U.S. Patent Application, the developing oxidation reaction product infiltrates a permeable preform of filler material (e.g., a silicon carbide preform material) in a direction towards a defined surface boundary. It was discovered that high fidelity is more readily achieved by providing the preform with a barrier means, as disclosed in Commonly Owned U.S. Patent Application Serial No. 861,024, filed May 8, 1986 (and now allowed), in the names of Marc S. Newkirk et al. This method produces shaped self-supporting ceramic bodies, including shaped ceramic composites, by growing the oxidation reaction product of a parent metal to a barrier means spaced from the metal for establishing a boundary or surface. Ceramic composites having a cavity with an interior geometry inversely replicating the shape of a positive mold or pattern are disclosed in Commonly Owned U.S. Patent Application Serial No. 823,542, filed January 27, 1986 (and now allowed), in the names of Marc S. Newkirk, et al, and in Commonly Owned U.S. Patent Application Serial No. 896,157, filed August 13, 1986, in the name of Marc S. Newkirk.

The above-discussed Commonly Owned Patent Applications, and Patent, disclose methods for producing ceramic and/or ceramic composite articles which overcome some of the traditional limitations or difficulties in producing ceramic articles as substitutes for metals in end-use applications.

Common to each of these Commonly Owned Patent Applications and Patent is the disclosure of embodiments of a ceramic body comprising an oxidation reaction product interconnected in one or more dimensions (usually in three dimensions) and, if desired, one or more metallic constituents or components. The volume of metal, which typically includes non-oxidized constituents of the parent metal and/or metal reduced from an oxidant or filler, depends on such factors as the temperature at which the oxidation reaction product is formed, the length of time during which the oxidation reaction is allowed to proceed, the composition of the parent metal, the presence of dopant materials, the presence of reduced constituents of any oxidant or filler materials, etc. Some of the metallic components can be isolated or enclosed, but also a substantial volume percent of metal can be interconnected and accessible, or rendered accessible, from an external surface of the ceramic body. It has been observed for these ceramic bodies that this metal-containing component or constituent (both isolated and interconnected) can range from about 1 to about 40 percent by volume, and sometimes higher. The metallic component can impart certain favorable properties to, or improve the performance of, the ceramic articles in many product applications. For example, the presence of metal in the ceramic structure may have a substantial benefit with respect to imparting fracture toughness, thermal conductivity, or electrical conductivity to the ceramic body.

The entire disclosures of all of the foregoing Commonly Owned Patent Applications and U.S. Patent are expressly incorporated herein by reference.

Definitions

As used herein in the specification and the appended claims, the terms below are defined as follows:

"Ceramic" is not to be unduly construed as being limited to a ceramic body in the classical sense, that is, in the sense that it consists entirely of non-metallic and inorganic materials, but rather refers to a body which is predominantly ceramic with respect to either composition or dominant properties, although the body contains minor or substantial amounts of one or more metallic constituents (isolated and/or interconnected depending on the processing conditions used to form the body) derived from the parent metal, or reduced from the oxidant or a dopant, most typically within a range of from about 1-40% by volume, but may include still more metal.

"Ceramic Composite Body" or "Ceramic Matrix Composite" as used herein means any ceramic matrix embedding a filler material.

"Filler" as used herein in conjunction with ceramic matrix composite bodies is intended to include either single constituents or mixtures of constituents which are substantially non-reactive with and/or of limited solubility in the metal (e.g., parent metal) and/or oxidation reaction product and may be single or multi-phase. Fillers may be provided in a wide variety of forms, such as powders, flakes, platelets, microspheres, whiskers, bubbles, etc., and may be either dense or porous. "Filler" may also include ceramic fillers, such as alumina or silicon carbide as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum parent metal. Fillers may also include metals.

"Liquid-Phase Oxidant" or "Liquid Oxidant" as used herein in conjunction with ceramic matrix composite bodies means an oxidant in which the identified liquid is the sole, predominant or at least a significant oxidizer of the parent or precursor metal under the conditions of the process.

Reference to a liquid oxidant means one which is a liquid under the oxidation reaction conditions. Accordingly, a liquid oxidant may have a solid precursor, such as a salt, which is molten at the oxidation reaction conditions. Alternatively, the liquid oxidant may have a liquid precursor (e.g., a solution of a material) which is used to impregnate part or all of the filler and which is melted or decomposed at the oxidation reaction conditions to provide a suitable oxidant moiety. Examples of liquid oxidants as herein defined include low melting glasses.

If a liquid oxidant is employed in conjunction with the parent metal and a filler, typically, the entire bed of filler, or that portion comprising the desired ceramic body, is impregnated with the oxidant (e.g., by coating or immersion in the oxidant).

"Oxidation Reaction Product", as used herein in conjunction with ceramic matrix composite bodies, means one or more metals in any oxidized state wherein the metal(s) has given up electrons to or shared electrons with another element, compound, or combination thereof. Accordingly, an "oxidation reaction product" under this definition includes the product of reaction of one or more metal with one or more oxidants.

"Oxidant" as used herein in conjunction with ceramic matrix composite bodies means one or more suitable electron acceptors or electron sharers and may be a solid, a liquid or a gas or some combination of these (e.g., a solid and a gas) at the oxidation reaction conditions. Typical oxidants include, without limitation, oxygen, nitrogen, a halogen, sulphur, phosphorus, arsenic, carbon, boron, selenium, tellurium, and or compounds and combinations thereof, for example, silica or silicates (as a source of oxygen), methane, ethane, propane, acetylene, ethylene, propylene (the hydrocarbon as a source of carbon), and mixtures such as air, $H_2/H_2O$ and $CO/CO_2$ (source of oxygen), the latter two (i.e., $H_2/H_2O$ and $CO/CO_2$) being useful in reducing the oxygen activity of the environment.

"Oxygen-Containing Gas Oxidant" as used herein in conjunction with ceramic matrix composite bodies is a particular gas or vapor in which oxygen is the sole, predominant or at least a significant oxidizer of the parent of precursor metal under the conditions existing in the oxidizing environment utilized.

"Parent Metal", as used herein in conjunction with ceramic composite bodies, means that metal(s) (e.g., aluminium, silicon, titanium, tin and/or zirconium) which is the precursor of a polycrystalline oxidation reaction product and includes that metal(s) as an essentially pure metal, a commercially available metal having impurities and/or alloying constituents therein, or an alloy in which that metal precursor is the major constituent. When a specified metal is mentioned as the parent of precursor metal (e.g., aluminum, etc.), the metal identified should be read with this definition in mind unless indicated otherwise by the context.

"Parent metal carcass" refers to any remaining parent metal which has not been consumed during formation of the ceramic composite body, and typically, which remains in at least partial contact with the formed ceramic composite body. It should be understood that the carcass may also typically include some oxidized constituents of the parent metal therein.

"Preform" or "Permeable Preform", as used herein in conjunction with ceramic composite bodies, means a porous mass of filler or filler material which is manufactured with at least one surface boundary which essentially defines a boundary for growing oxidation reaction product, such mass retaining sufficient shape integrity and green strength to provide dimensional fidelity prior to being infiltrated by the ceramic matrix. This mass is: (1) sufficiently porous to allow the vapor-phase oxidant (if a vapor-phase oxidant is used) to permeate the preform and contact parent metal, and (2) sufficiently permeable to accommodate development or growth of oxidation reaction product. A preform typically comprises a bonded array or arrangement of filler, either homogeneous or heterogeneous, and may be comprised of any suitable material (e.g., ceramic and/or metal particulates, powders, fibers, whiskers, etc., and any combination thereof). A preform may exist either singularly or as an assemblage.

"Solid-Phase Oxidant" or "Solid Oxidant" as used herein in conjunction with ceramic matrix composite bodies means an oxidant in which the identified solid is the sole, predominant or at least a significant oxidizer of the parent or precursor metal under the conditions of the process.

When a solid oxidant is employed in conjunction with the parent metal and a filler, it is usually dispersed throughout the entire bed of filler or that portion of the bed into which the oxidation reaction product will grow, the solid oxidant being, for example, particulates admixed with the filler or coatings on the filler particles. Any suitable solid oxidant may be thus employed including elements, such as boron or carbon, or reducible compounds, such as silicon dioxide or certain borides of lower thermodynamic stability than the boride reaction product of the parent metal. For example, when boron or a reducible boride is used as a solid oxidant for an aluminum parent metal, the resulting oxidation reaction product comprises aluminum boride.

In some instances, the oxidation reaction of the parent metal may proceed so rapidly with a solid oxidant that the oxidation reaction product tends to fuse due to the exothermic nature of the procedss. This occurrence can degrade the microstructural uniformity of the ceramic body. This rapid exothermic reaction can be ameliorated by mixing into the composition relatively inert fillers which absorb the excess heat. An example of such a suitable inert filler is one which is identical, or substantially identical, to the intended oxidation reaction product.

"Vapor-Phase Oxidant" as used herein in conjunction with ceramic matrix composite bodies identifies the oxidant as containing or comprising a particular gas or vapor and means an oxidant in which the identified gas or vapor is the sole, predominant or at least a significant oxidizer of the parent or precursor metal under the conditions obtained in the oxidizing environment utilized. For example, although the major constituent of air is nitrogen, the oxygen content of air is the sole oxidizer for the parent metal because oxygen is a significantly stronger oxidant than nitrogen. Air therefore falls within the definition of an "Oxygen-Containing Gas Oxidant" but not within the definition of a "Nitrogen-Containing Gas Oxidant" (an example of a "nitrogen-containing gas" oxidant is forming gas, which typically contains about 96 volume percent nitrogen and about 4 volume percent hydrogen) as those terms are used herein and in the claims.

## Summary of the Invention

The present invention relates to a method of using a novel self-supporting ceramic composite material in an environment which causes the material to be subjected to thermal shock. The composite ceramic body is obtained by infiltrating a filler material or preform (e.g., SiC) with an oxidation reaction product of a molten parent metal (e.g., aluminum) with an oxidant, such as a vapor-phase oxidant.

The self-supporting ceramic composite body can be produced by forming a pre-fired silicon carbide particulate into a preform by an appropriate forming technique, such as by, for example, slip casting, sediment casting, dry pressing, etc. The preform may be overlayed at least partially with a barrier material which assists in defining an outer surface of the resultant ceramic composite body. The filler material shaped into a preform is then positioned or oriented adjacent to the parent metal such that formation of an oxidation reaction product of the parent metal will occur in a direction towards the oxidant and into the preform, and moreover, towards the barrier means, if the same is utilized. The parent metal is heated to a temperature above its melting point but below the melting point of its oxidation reaction product to form a body of molten metal. At this temperature, or within this temperature range, the molten metal reacts with the oxidant to form the oxidation reaction product. At least a portion of the oxidation reaction product is maintained in contact with and between the molten metal and the oxidant to draw molten metal through the oxidation reaction product towards and into contact with the oxidant such that fresh oxidation reaction product continues to form at an interface between the oxidant and previously formed oxidation reaction product, thus infiltrating the adjacent preform. The reaction is continued for a time sufficient to infiltrate at least a portion of the preform with a polycrystalline material consisting essentially of the oxidation reaction product of the parent metal and, optionally, at least one non-oxidized metallic constituent which is dispersed or distributed throughout the polycrystalline material. The preform should be sufficiently permeable to permit or accommodate growth of the oxidation reaction product within the preform, and to permit the gaseous oxidant to permeate the preform and contact the molten parent metal. It should be understood that the polycrystalline matrix material may exhibit voids or porosity in place of the metal phase, but the volume percent of voids will depend largely on such conditions as temperature, time, dopants, and type of parent metal. If a barrier means is used, the ceramic composited body will continue to grow to the barrier, provided that sufficient parent metal is present to permit such growth.

As explained in the above-described Commonly Owned Patent Applications and Patent, the use of dopant materials can favorably influence or promote the oxidation reaction process. Silicon is a useful dopant with an alumina parent metal, especially, in combination with other dopants, and can be applied externally onto the parent metal and a useful source for such a dopant is silica. As discussed in Commonly Owned Patent Application Serial No. 070,006, filed July 6, 1987, which is a continuation-in-part of Serial No. 908,473, filed September 17, 1986 (and now abandoned), both in the names of H. Daniel Lesher et al, and entitled "A Method of Making Ceramic Composites", the subject matter of which is herein incorporated by reference, a silicon carbide particulate can be a very desirable filler material because at elevated temperatures in air, a silica film can form on an external surface of the silicon carbide particles. Thus, a silicon carbide preform can be particularly useful because it serves not only as a filler material, but equally significantly provides a source of dopant material because of its intrinsic doping properties. Stated more particularly, a silica film formed on a silicon carbide material can be reduced by molten aluminum parent metal to yield a silicon dopant which promotes growth of the polycrystalline matrix through the silicon carbide filler. In addition, the silica coating on silicon carbide particles is advantageous in that there is a reduction of the tendency for the formation of $Al_4C_3$ during growth of the oxidation reaction product of the parent metal. Such $Al_4C_3$ is undesirable because it is an unstable product in the presence of moisture levels normally present in ambient air, which results in the evolution of methane and the degradation of mechanical properties of the resulting composite body.

It has been unexpectedly discovered that ceramic composite bodies produced according to the above procedures can exhibit very desirable thermal shock resistance. Particularly, when such ceramic composite bodies are placed in an environment wherein the cycling of temperatures is expected, for example, in a recuperator of a furnace, the ceramic composite bodies retain a significant portion of their room temperature strength, even after being thermally cycled. This result is unexpected because the amount of oxidation reaction product (e.g., aluminum formed from an aluminum parent metal) is significant and alumina, typically, by itself, does not exhibit such desirable thermal shock properties. Moreover, the novel ceramic composite body is inexpensive to produce, relative to, for example, a hot pressed silicon carbide body.

Thus, it has been discovered that a relatively inexpensive ceramic composite body which contains alumina as an oxidation reaction product of an aluminum parent metal, said alumina being a matrix which embeds a silicon carbide particulate material, exhibits unexpected thermal shock properties. Such discovery is a significant discovery and the contribution to the art.

Brief Description of the Drawings

Fig. 1 is a cross-section showing a setup used to produce a ceramic composite body; and
Fig. 2 is a plot of $\Delta T(°C)$ versus percent strength retention for three comparative materials ("A, B and C") and a ceramic composite body "D" which is used according to the present invention.
Fig. 3 is a plot of quench temperature difference (°C) versus percent strength retention for a hot pressed silicon carbide piece and a piece produced by the method described in the Examples of the instant application and labelled "500 SiC/Lanx" in the Figure.

Detailed Description of the Invention and Preferred Embodiments

To form a ceramic composite body which is to be used in accordance with the method of use of the present invention, a parent metal, which may be doped (as explained below in greater detail) and which is the precursor to the oxidation reaction product, is formed into a ingot, billet, rod, plate or the like and is placed into an inert bed, crucible or other refractory container. The parent metal may comprise one or more pieces and may be suitably shaped by any appropriate means. A permeable, shaped preform (described below in greater detail) is manufactured so as to have at least one defined surface boundary and to be permeable to the vapor-phase oxidant and to the infiltrating oxidation reaction product. The preform is placed adjacent to, and preferably in contact with, at least one surface of, or a portion of a surface of, the parent metal such that at least a portion of the defined surface boundary of the preform is generally positioned distantly or outwardly spaced apart from the metal surface of the parent metal. The preform preferably is in contact with an areal surface of the parent metal; but when desired, the preform may be partially immersed, but not totally immersed, in the molten metal because complete immersion would cut-off or block access of the vapor-phase oxidant into the preform and thus inhibit proper development of the oxidation reaction product which embeds the preform. Formation of the oxidation reaction product will occur in a direction towards the defined surface boundary. The set-up of parent metal and permeable preform are placed in a suitable container and into a furnace. The atmosphere in the furnace is an oxidant to permit vapor-phase oxidation of molten parent metal to occur. The furnace is than heated-up to process conditions.

A preform usually in the manufacture of the composite body is one that is sufficiently porous or permeable to permit a vapor-phase oxidant to permeate into the preform so as to contact with the parent metal. The preform also should be sufficiently permeable to accommodate the development or growth of the oxidation reaction product as a matrix within the preform without substantially disturbing, upsetting, or otherwise altering the configuration or geometry of the preform.

A solid, liquid, or vapor-phase oxidant, or a combination of such oxidants, may be employed. Typical vapor-phase oxidants include, without limitation, oxygen, nitrogen, a halogen, sulphur, phosphorus, arsenic, carbon, boron, selenium, tellurium, and/or compounds and combinations thereof, for example, silica (as a source of oxygen), methane, ethane, propane, acetylene, ethylene, and propylene (as sources of carbon), and mixtures such as air, $H_2/H_2O$ and $CO/CO_2$) being useful in reducing the oxygen activity of the environment. Accordingly, the ceramic structure of the invention may comprise an oxidation reaction product comprising one or more of oxides, nitrides, carbides, borides and oxynitrides. More specifically, the oxidation reaction product may, for example, be one or more of aluminum oxide, aluminum nitride, silicon carbide, silicon boride, aluminum boride, titanium nitride, zirconium nitride, titanium boride, zirconium boride, silicon nitride, hafnium boride and tin oxide.

As explained in the Commonly Owned Patent Applications and Patent, the addition of dopant materials, in conjunction with the aluminum parent metal, can favorably influence the oxidation reaction process. The function or functions of the dopant material can depend upon a number of factors other than the dopant material itself. These factors include, for example, the end product desired, the particular combination of dopants when two or more dopants are used, the use of an externally applied dopant in combination with an alloyed dopant, the concentration of the dopant, the oxidizing environment, and the process conditions.

The dopant or dopants used in conjunction with the aluminum parent metal (1) may be provided as alloying constituents of the aluminum parent metal, or (2) may be applied to at least a portion of the surface of the aluminum parent metal, or any combination of techniques (1) and (2) may be employed. For example, an alloyed dopant may be used in combination with an externally applied dopant. A source of the dopant may be provided by placing a rigid body of dopant in contact with at least a portion of the aluminum parent metal surface. For example, a thin sheet of silicon-containing glass can be placed upon a surface of the aluminum parent metal. When the aluminum parent metal (which may be internally doped with Mg) overlaid with the silicon-containing material is melted in an oxidizing environment (e.g., in the case of aluminum in air, between about 850°C to about 1450°C, preferably about 900°C to about 1350°C), growth of the polycrystalline ceramic material occurs. In the case where the dopant is externally applied to at least a portion of the surface of the aluminum parent metal, the polycrystalline aluminum oxide structure generally grows substantially beyond the dopant layer (i.e., to beyond the depth of the applied dopant layer). In any case, one or more of the dopants may be externally applied to the parent metal surface. Additionally, any concentration deficiencies of the dopants alloyed within the parent metal may be augmented by additional concentration of the respective dopant(s) applied external to the aluminum parent metal.

Useful dopants for an aluminum parent metal, particularly with air as the oxidant, include, for example, magnesium metal and zinc metal, in combination with each other or in combination with other dopants described below. These metals, or a suitable source of the metals, may be alloyed into the aluminum-based parent metal at concentrations for each of between about 0.1-10% by weight based on the total weight of the resulting doped metal. Concentrations within this range appear to initiate the ceramic growth, enhance metal transport and favorably influence the growth morphology of the resulting oxidation reaction product. The concentration range for any one dopant will depend on such factors as the combination of dopants and the process temperature.

Other dopants which are effective in promoting alumina polycrystalline oxidation reaction product growth, from aluminum parent metal systems are, for example, silicon, germanium, tin and lead, especially when used in combination with magnesium. One or more of these other dopants, or a suitable source of them, is alloyed into the aluminum parent metal system at concentrations for each of from about 0.5 to about 15% by weight of the total alloy; however, more desirable growth kinetics and growth morphology are obtained with dopant concentrations in the range of from about 1-10% by weight of the total parent metal alloy. Lead as a dopant is generally alloyed into the aluminum-based parent metal at a temperature of at least 1000C so as to make allowances for its low solubility in aluminum; however, the addition of other alloying components, such as tin, will generally increase the solubility of lead and allow the alloying materials to be added at a lower temperature.

One or more dopants may be used in conjunction with the parent metal. For example, in the case of an aluminum parent metal and with air as the oxidant, particularly useful combinations of dopants include (a) magnesium and silicon or (b) magnesium, zinc and silicon. In such examples, a preferred magnesium concentration falls within the range of from about 0.1 to about 3% by weight, for zinc in the range of from about 1 to about 6% by weight, and for silicon in the range of from about 1 to about 10% by weight.

Additional examples of dopant materials, useful with an aluminum parent metal, include sodium and lithium, which may be used individually or in combination with one or more other dopants depending on the process conditions. Sodium and lithium may be be used in very small amounts in the parts per million range, typically about 100-200 parts per million, and each may be used alone or together, or in combination with other dopant(s). Calcium, boron, phosphorus, yttrium, and rare earth elements such as cerium lanthanum,

6

praseodymium, neodymium and samarium are also useful dopants, and herein again especially when used in combination with other dopants.

The dopant materials, when used externally, are usually applied to a portion of a surface of the parent metal as a uniform coating thereon. The quantity of dopant is effective over a wide range relative to the amount of parent metal to which it is applied and, in the case of aluminum, experiments have failed to identify either upper or lower operable limits. For example, when utilizing silicon in the form of silicon dioxide externally applied as the dopant for an aluminum-based parent metal using air or oxygen as the oxidant, quantities as low as 0.00003 gram of silicon per gram of parent metal, or about 0.0001 gram of silicon per square centimeter of exposed parent metal surface, together with a second dopant having a source of magnesium and/or zinc produce the polycrystalline ceramic growth phenomenon. It also has been found that a ceramic structure is achievable from an aluminum-based parent metal using air or oxygen as the oxidant by using MgO as the dopant in an amount greater than about 0.0008 gram of Mg per gram of parent metal to be oxidized and greater than 0.003 gram of Mg per square centimeter of parent metal surface upon which the MgO is applied. It appears that to some degree an increase in the quantity of dopant materials will decrease the reaction time necessary to produce the ceramic composite, but this will depend upon such factors as type of dopant, the parent metal and the reaction conditions. However, increasing the amount of dopant material employed typically results in increased processing time in the leaching step to remove the included dopant material.

Where the parent metal is aluminum internally doped with magnesium and the oxidizing medium is air or oxygen, it has been observed that magnesium is at least partially oxidized out of the alloy at temperatures of from about 820 to 950°C. In such instances of magnesium-doped systems, the magnesium forms a magnesium oxide and/or magnesium aluminate spinel phase at the surface of the molten aluminum alloy and during the growth process such magnesium compounds remain primarily at the initial oxide surface of the parent metal alloy (i.e., the "initiation surface") in the growing ceramic structure. Thus, in such magnesium-doped systems, an aluminum oxide-based structure is produced apart from the relatively thin layer of magnesium aluminate spinel at the initiation surface. Where desired, this initiation surface can be readily removed as by grinding, machining, polishing or grit blasting prior to comminuting the polycrystalline ceramic product.

Ceramic composite bodies manufactures according to the above-discussed methods and those methods disclosed in the aforementioned Commonly Owned Patent Applications and Patent, are then subjected to a thermal shock test to determine the resistance of the ceramic composite bodies to thermal shocking. Ceramic composite bodies are heated to an elevated temperature and are thereafter quenched into boiling water and the strength of the body after quenching is compared to the strength of the body before the quenching. The percent strength retention can then be calculated by determining the strength before and after thermal shocking and dividing the strength after thermal shocking by the strength before thermal shocking and multiplying by 100.

The following are examples of how ceramic composite bodies can be produced and how the produced ceramic composite bodies are then tested to determine thermal shock resistance. It is noted that the examples are exemplary and should not be construed as limiting the scope of the invention as defined in the claims appended hereto.

## Examples

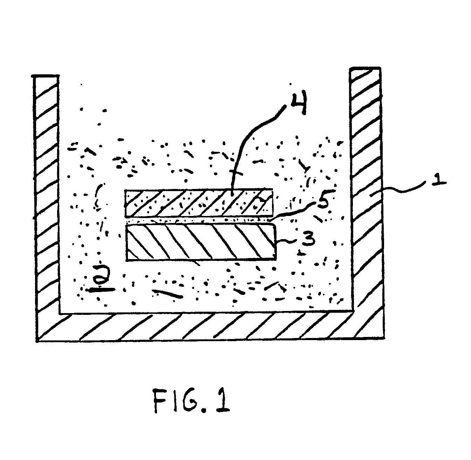

Figure 1 shows a cross-section of an assembly which was utilized to form a ceramic composite body. Particularly, refractory boat (1) was partially filled with wollastonite particles (2) (coarse fiber-Nyad SP, from NYCO, Inc.), which particles acted as a barrier material to confine the oxidation reaction. An ingot of an aluminum alloy (3) measuring about 7 1/2 inches x 7 1/2 inches x 1/2 inch was then placed upon the wollastonite bedding. The aluminum alloy used in this example was determined through chemical analysis to be consistent with the nominal specification for this alloy (i.e. comprising 7.5-9.5% Si, 3.0-4.0% Cu, <2.9% Zn, <1.5% Fe, <0.5% Mn, <0.5% Ni, <0.35% Sn, and <0.1% Mg), except that the Mg concentration was found to be approximately 0.17% to 0.18% by weight. The higher Mg level is believed to be important in view of the established role of Mg as a dopant or a promoter of the oxidation reaction.

A powdered nickel metal (5) obtained from Atlantic Engineers, having a size of -325 mesh, was placed as a layer upon a top surface of the alloy (3). The thickness of the nickel poweder (5) was about 1/32-1/16 inch.

A preform (4) was than placed on top of the aluminum alloy ingot (3). The preform (4) was manufactured by sedimentation casting techniques as disclosed in the aforementioned Commonly Owned Patent Applications. Specifically, silicon carbide particles known as Crystalon #39, from Norton Company were prefired at a temperature of about 1250°C for about 24 hours. The silicon carbide particles agglomerated and were thereafter ground to a size of about -200 mesh. The ground particles were then slurried in water containing about 2% by weight of a polyvinyl acetate latex binder (Elmer's Wood Glue). Preforms were prepared by pouring the slurry into a mold having an inner diameter of about 7 1/2 inches x 7 1/2 inches square. The slurry was allowed to stand undisturbed which permitted the solid particles to settle into a layer approximately 1/2 inch thick. Excess water in the casting process was poured and sponged from the surface.

Additional wollastonite particles (2) were then placed around and on top of the preform/metal assembly, which wollastonite particles confined the oxidation reaction to the volume contained within the preform (4).

The refractory boat (1), with its contents, was placed into an electric resistance furnace and heated to a temperature of about 1000°C over a period of 10 hours. The furnace was maintained at about 1000°C for about 160 hours. The furnace was then cooled down to ambient over about a 10 hour period.

Upon removal from the furnace, it was found that an aluminum oxide ceramic matrix had grown from the surface of the molten aluminum alloy and had infiltrated the silicon carbide preform. After the infiltrated preform, which constituted the ceramic composite body, was mechanically separated from the remaining parent metal carcass, samples were cut from the ceramic composite body.

Particularly, bars measuring about 1 cm x 1 cm x 7 cm were cut from the ceramic composite body. These samples were then subjected to a thermal shock test. The thermal shock test involved heating the samples to a predetermined temperature and thereafter quenching the heated samples into boiling water which was maintained at about 100°C. The quenched samples were than removed from the water and placed on a dry bedding and were permitted to dry in air. Flexural strength measurements were then made upon the dried samples. The flexural strength determinations were made by using a 4-point flexural test apparatus on a Model CITS 2000 Syntech test machine using the procedures outlined in U.S. Army Mil-Std-1942 (MR). The steel flexure fixture had an upper span of 19.93 mm and a lower span of 60 mm. Flexural strengths were calculated from the peak breaking loads, the specimen dimensions and the fixture dimensions by using elastic beam equations. The crosshead speed of the test machine was 0.5 mm/min.

Table 1 lists the various temperature gradients ($\Delta T$); the flexural strength of the body after quenching; and the percent of the flexural strength retained after quenching. It is clear from Table 1 that for a $\Delta T$ ranging from 200°C to 700°C, ceramic composite bodies unexpectedly retained a substantial portion of their room temperature strength. Stated more particularly, for example, sample #5 was placed in an electric resistance heating furnace, in air, and preheated to a temperature of about 500°C. Upon equilibrating to that temperature, sample #5 was removed from the furnace and placed into boiling water of about 100C. Thus, the difference in temperature to which the sample was exposed was about 400°C. Upon such thermal shocking, sample #5 showed a retention of about 96% of its room temperature strength of 357 MPa. Such retention of strength after thermal quenching was completely unexpected.

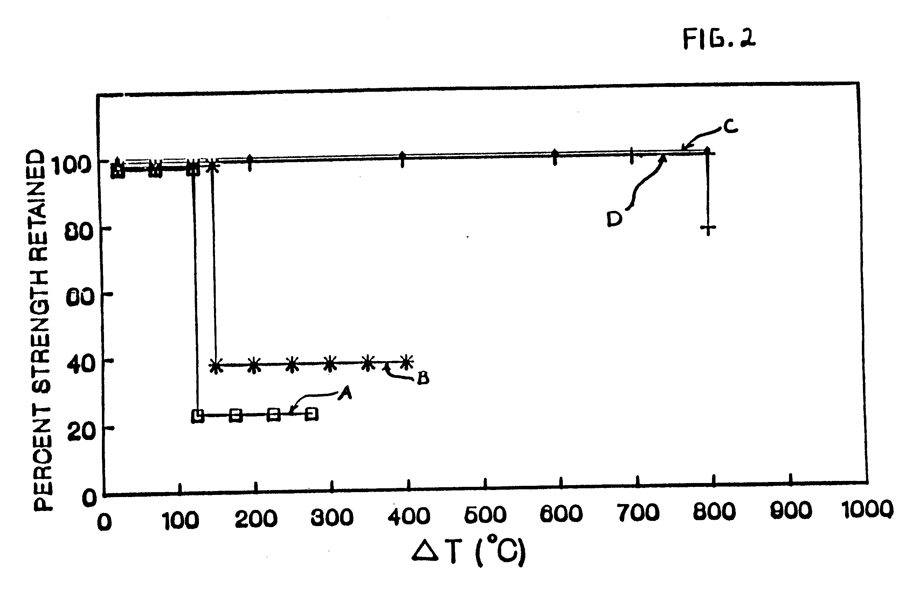

Figures 2 herein shows the comparative performance of other ceramic bodies. Specifically, the line designated "B" represents a composite body which was made by a similar method to that disclosed herein, however, rather then using a silicon carbide filler material, an alumina filler material was used. Thus, an alumina oxidation reaction product embedded an alumina filler material. It is clear from line B that only about 40% of room temperature flexural strength was retained after thermal quenching at 150°C. Moreover, line "A" represents a standard alumina material, obtained from Coors and designated AD 96. This standard alumina material also showed a small retention of strength after being subjected to a thermal shock. Sample "C" represents a hot pressed silicon carbide body. This hot pressed body showed a higher retention of strength after being thermal cycled. The line labeled "D" is a plot of the data contained in Table 1 and thus represents the performance of a silicon carbide filler embedded by an alumina oxidation reaction product. It is clear from the comparison of lines "C" and "D" in Figure 2, that ceramic composite body "D" retained substantially all of its room temperature strength up to about a $\Delta T$ of 700°C. This is quite surprising because in view of the plots "A" and "B" one would expect that if an alumina material, especially when the alumina material is a matrix for a filler material, is combined in a ceramic composite body, the ceramic composite body would not show such desirable thermal shock performance. Moreover, while the hot pressed silicon carbide body "C" showed similar strength retention relative to ceramic composite body "D", the hot pressed silicon carbide body is expensive, and difficult in some cases, to produce, relative to the ceramic composite body "D".

While applicant does not wish to be bound by any particular theory or explanation, it is believed that when there is sufficient silicon carbide filler material in the ceramic composite bodies of the instant invention, the silicon carbide filler material will conduct heat away from the alumina matrix at a rate which is sufficient to allow the alumina matrix to cool rapidly without failing, i.e., cracking to an extent such that the matrix cannot bear a load. Further, applicant believes that the method of the instant invention may be generic to the utilization of a sufficient quantity of embedded filler material which has a thermal conductivity which is greater than the thermal conductivity of the matrix material.

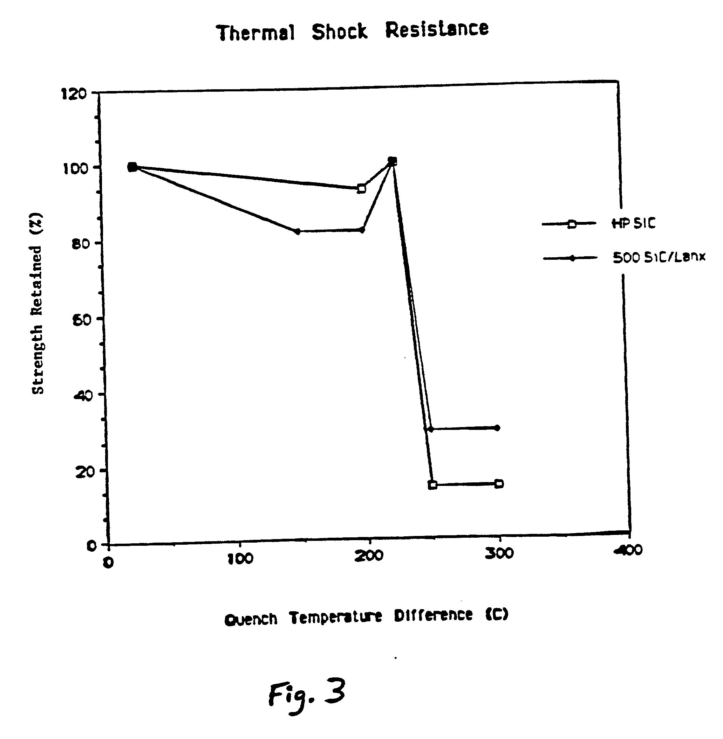

In order to compare the thermal shock performance of ceramic composite materials produced in accordance with the technique described above, with a commercially available hot pressed silicon carbide material, a number of 7cm by 1cm by 1cm bars of both types of material were quenched into cold water at successively higher temperatures in order to achieve thermal fracture thereof. The hot pressed silicon carbide material used in the thermal shock tests was produced by Cercom, Inc. of Vista California. The material tested against the hot pressed silicon carbide was made by the technique described above using 500 grit silicon carbide. This material is labeled "500 SiC/Lanx" in Table 2 and Figure 3. By quenching into cold water, a much greater heat transfer rate is achieved and both materials can be successfully fractured at relatively low quench temperature differences (i.e., 225-250°C). The results of these cold water quench tests are summarized in Table 2 and graphically presented in Figure 3.

Thus, the silicon carbide filler/aluminum oxide matrix composite materials of the present invention exhibit a thermal shock resistance as good as (or better than) commercially available hot pressed silicon carbide materials, and should perform exceptionally well under thermal stresses.

While the present invention has been disclosed in its preferred embodiments, it is to be understood that the present invention should not be specifically limited thereto, because various modifications will occur to an artisan of ordinary skill. Thus, the present invention should be interpreted in the spirit of the following claims.

## TABLE 1

| Sample No. | T(°C) | Flexural Strengh After Quenching (MPa) | Percent Strength Retained |
|---|---|---|---|
| 1 | 200 | 342 | 96% |
| 2 | 250 | 331 | 93% |
| 3 | 300 | 329 | 92% |
| 4 | 350 | 332 | 93% |
| 5 | 400 | 343 | 96% |
| 6 | 500 | 332 | 93% |
| 7 | 600 | 347 | 97% |
| 8 | 700 | 376 | 100% |
| 9 | 800 | 289 | 81% |

Room Temperature Strength = 357 MPa

EP 0 336 873 A2

TABLE 2

| Quench Temperature Difference (°C) | Percent Strength Retained | |
| --- | --- | --- |
| | Hot Pressed SiC | 500 SiC/Lanx |
| 25 | 100 | 100 |
| 150 | | 82 |
| 200 | 93 | 82 |
| 225 | 100 | 100 |
| 250 | 14 | 29 |
| 300 | 14 | 29 |

Claims

1. A method of using a ceramic composite body, said ceramic composite body comprising at least one filler material embedded by an oxidation reaction product of a parent metal and at least one oxidant, said method comprising placing said ceramic composite body in an environment which causes the ceramic composite body to be subject to thermal shock.

2. The method of claim 1, wherein said thermal shock is induced by quenching said ceramic composite body in boiling water at about 100°C, and further wherein said ceramic composite body is at a temperature greater than about 100°C before said quenching.

3. A ceramic composite body which retains at least 92% of its room temperature strength after being subjected to a thermal shock of about $\Delta T = 700°C$ by quenching said ceramic composite body at approximately 800°C in boiling water at about 100°C.

4. The ceramic composite body of claim 3, wherein said ceramic composite body comprises a silicon carbide filler embedded by an aluminum oxide matrix.

5. The method of claim 1, wherein said thermal shock is induced by quenching said ceramic composite body in cold water at about 0°C, and further wherein said ceramic composite body is at a temperature greater than about 25°C before said quenching.

6. A ceramic composite body comprising at least one filler material embedded by an oxidation reaction product of a parent metal and at least one oxidant, said ceramic composite body retaining at least about 50% of its room temperature strength after being subjected to a thermal shock of less than about $\Delta T = 225°C$.

7. The ceramic composite body of claim 6, wherein said ceramic composite body comprises a silicon carbide filler embedded by an aluminum oxide matrix.

8. The ceramic composite body of claim 6, wherein said ceramic composite body retains at least about 82% of its room temperature strength after being subjected to said thermal shock.

9. The ceramic composite body of claim 6, wherein said ceramic composite body retains at least about 25% of its room temperature strength after being subjected to a thermal shock of at least about $\Delta T = 225°C$.

10. A method of using a ceramic composite body, said ceramic composite body a matrix embedding filler material, having a thermal conductivity which is greater than the thermal conductivity of the matrix, said matrix comprising an oxidation reaction product of a parent metal and at least one oxidant, and said filler material being present within said ceramic composite body in sufficient quantity to conduct heat away from the matrix at a rate which is sufficient to allow the matrix to cool rapidly without failing.

11

FIG. 1

FIG.2

EP 0 336 873 A2

## Thermal Shock Resistance

Fig. 3